# EUROPÄISCHE PATENTSCHRIFT

(11) **EP 2 123 341 B1**
(45) Veröffentlichungstag und Bekanntmachung des Hinweises auf die Patenterteilung: **09.08.2017**
(21) Anmeldenummer: 09006200.1
(22) Anmeldetag: 07.05.2009
(51) Int. Cl.: B01D 45/12, B01J 23/50, B01J 38/60

(54) **Recycling-Verfahren für Katalysatorformkörper**
Recycling method for catalytic mould
Procédé de recyclage pour corps de formage de catalyseurs

(30) Priorität: 21.05.2008 DE 102008024590
(43) Veröffentlichungstag der Anmeldung: 25.11.2009
(73) Patentinhaber: Heraeus Deutschland GmbH & Co. KG, 63450 Hanau (DE)
(72) Erfinder: Blautzik, Dieter, 63791 Karlstein (DE); Alt, Hans-Joachim, 63486 Bruchköbel (DE); Patzelt, Peter, 63743 Aschaffenburg (DE); Meyer, Horst, Dr., 63674 Altenstadt (DE)
(74) Vertreter: Heraeus IP

(56) Entgegenhaltungen:
- EP-A1- 0 489 494
- WO-A1-2007/034298
- US-A1- 2006 144 791
- US-A1- 2007 183 951
- US-B1- 7 166 145

## Beschreibung

Die Erfindung betrifft ein Verfahren zur Entfernung des Edelmetalls, insbesondere Silber, aus edelmetallhaltigen, insbesondere silberhaltigen Katalysatorformkörpern.

### Stand der Technik

Es ist schwierig, von verbrauchtem Katalysatorträgermaterial die Edelmetalle, z.B. Silber, wieder vollständig zu entfernen. In US 6,156,329 wird deshalb eine neuartige Verwendung von restsilberhaltigen Katalysatorträgern als antimikrobiell wirksames Material für die Wasserbehandlung oder für Beschichtungen vorgeschlagen, um den zwangsweise anfallenden Restsilbergehalt zu nutzen.

US2007/0183951 A1 beschreibt ein Verfahren zur Entfernung von Platin, Palladium und Rhodium aus beschichteten Wabenkörpern.

### Aufgabenstellung

Wenn für die noch silberhaltigen Trägermaterialien jedoch keine eigene Verwendung wie in US 6,156,329 vorgesehen ist, sondern das Material im Rahmen von Recycling-Verfahren wieder neu als Katalysator beschichtet werden soll oder für andere Zwecke wieder verwertet werden soll, stellt sich die Aufgabe, möglichst viel Silber in das Extrakt zu bekommen, um ein weitestgehend silberfreies Trägermaterial zu erhalten. Das ist beispielsweise möglich, wenn das Material zerkleinert wird, so dass die Wirkung der Laugung erhöht wird. Das Zerkleinern erfordert jedoch Energie und maschinellen Aufwand. Zudem wäre dafür zu sorgen, dass das ausgelaugte Material vor der Neubeschichtung wieder zu Trägern geformt wird.

### Die Erfindung

Demgegenüber wurde ein Verfahren entwickelt, bei dem überraschenderweise ganz auf das Zerkleinern verzichtet werden kann. Erfindungsgemäß werden die edelmetallhaltigen Formkörper, z.B. Pellets oder Zylinderringe, nach der ersten Laugung im Ganzen mittels Schneckenförderung oder Vibrationsrinne einer Waschzentrifuge zugeführt, wo der Edelmetall-Extraktionsprozess fortgesetzt und das Trägermaterial von Flüssigkeit weitgehend befreit werden. Die extraktierte Edelmetallmenge wird dadurch erhöht, und der Träger enthält nur noch sehr wenig Edelmetall. Dabei wird nach der ersten Laugung mit Salpetersäure das Trägermaterial samt Mutterlauge sofort auf die Zentrifuge gefördert und der weitere Laugungs - und Flüssigkeitsabtrennungsprozess komplett auf der Zentrifuge durchgeführt. Die Erfindung betrifft somit ein Verfahren zur Entfernung des Edelmetalls, insbesondere Silber, aus edelmetallhaltigen, insbesondere silberhaltigen, Katalysatorformkörpern, mit den Schritten
**A** Auslaugen des Edelmetalls aus einer Schüttung der Katalysatorformkörper,
**B** Entfernen der Mutterlauge,
**C** Automatisches Fördern der Formkörper in eine Zentrifuge,
**D** Erneutes Auslaugen in der Zentrifuge,
**E** Abtrennen der restlichen Mutterlauge durch Zentrifugieren.

Das Auslaugen in Schritt **A** und **D** erfolgt im Fall von Silber mit Salpetersäure.

Schritt **B** kann z.B. in Ablaufenlassen, Abpumpen oder Absaugen bestehen.

Schritt **C** wird zweckmäßig mittels Schneckenförderung oder Vibrationsförderung durchgeführt.

Die für die Schritte **C** bis **E** benutzte Zentrifuge sollte eine oder mehrere der folgenden Anforderungen erfüllen:
1. Beim Befüllen der Zentrifuge sollte es möglich sein, eine weitgehend gleichmäßige Verteilung der Katalysatorformkörper über den Trommeldurchmesser und über die Trommelhöhe zu erreichen, weil sonst a) die Zentrifuge unwuchtig läuft und b), weil die Auswaschung der Feststoffschüttung dann nicht gleichmäßig erfolgen kann, was eine vollständige Auswaschung der edelmetallhaltigen Lösung verhindert. Eine Vielzahl dem Fachmann bekannter Zentrifugenanordnungen mit einer konventionellen Befüllung, z.B. einem einfachen Füllrohr, scheidet daher aus.
2. Die Zentrifuge sollte eine diskontinuierliche Verfahrensweise haben, da sonst nicht genügend Verweilzeit für den Waschvorgang in der Maschine zur Verfügung steht (der Waschvorgang ist diffusionsgesteuert). Alle vollkontinuierlichen Zentrifugen, z.B. Dekantierzentrifugen, Separatoren und Schubzentrifugen, scheiden daher aus. Das Verfahren erfolgt mithin zweckmäßig so, dass die Schritte **D** und **E** im Batchbetrieb, also diskontinuierlich, ablaufen
3. Die Zentrifuge sollte, auch wenn der Fest-/Flüssig-Trennvorgang inkl. Auswaschung selbst vom Prinzip her diskontinuierlich erfolgt, eine automatische quasikontinuierliche Entleerung des ausgewaschenen Materials sicherstellen. Das ist in diesem speziellen Fall besonders schwierig, weil das in der Maschine mit hohen C-Werten an die Trommelwand geschleuderte Material in der Regel sehr hart und schleißend ist (z.B. Al₂O₃ oder Al₂O₃/ZrO₂-Trägermaterialien). Die bewährte Methode des Austrags über Schälrohre oder Schälmesser eignet sich aus diesem Grund für solche Trägermaterialien nicht. Alle Schälzentrifugen scheiden daher ebenso aus wie alle manuell zu entleerenden Zentrifugen.

Aufgrund der Summe der aufgeführten Anforderungen erweisen sich praktisch alle auf dem Markt erhältlichen Zentrifugen als für die erfindungsgemäß gestellte Aufgabe ungeeignet, soweit es sich um das Auslaugen von Silber aus Al₂O₃-Formkörpern handelt.

Die Erfindung betrifft daher insbesondere die Verwendung von geeigneten Zentrifugen des Typs Ziehfilterzentrifuge und Stülpfilterzentrifuge im Rahmen des oben genannten Verfahrens. Dabei handelt es sich um übliche Zentrifugen wie z.B. der Fa. Ferrum, Typ DZF 1000/1250.

Die Formkörper sind bevorzugt zylindrische Röhrchen aus Aluminiumoxid. Es versteht sich, dass sich das Verfahren an andere verbrauchte Katalysatorformkörper, die gegebenenfalls mit anderen Metallen beschichtet sind, anpassen lässt. Dies kann beispielsweise etwa durch die Wahl der Lösungsmittel, Laugezeit und Temperatur geschehen.

### Abbildungen

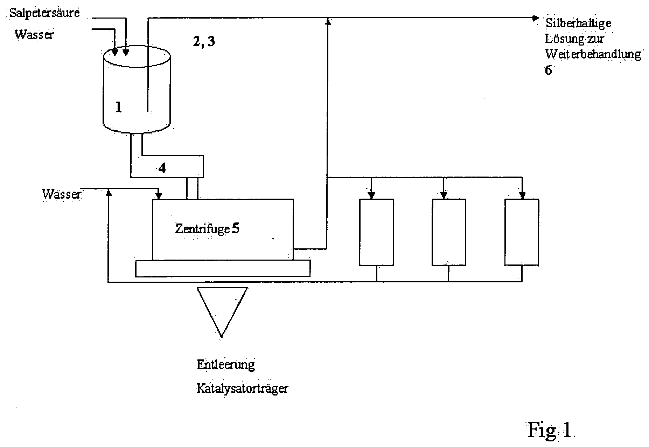

Fig. 1 zeigt den Verfahrensablauf einer beispielhaften Ausführungsform des Verfahrens

### Beispiel

Bei der in Fig. 1 gezeigten Ausführungsform des Verfahrens wird zunächst in einem Behälter 1 eine verbrauchte Katalysatorschüttung mit einer Mischung aus konzentrierter Salpetersäure und Wasser ausgelaugt (entspricht Schritt **A**). Die entstandene Silbernitratlösung und eine erste Waschwassermenge 2, 3 werden abgezogen (Schritt **B**). Sie werden später der Silberchloridfällung 6 oder einer anderen Weiterbehandlung zugeführt.

Ein Teil der so behandelten Katalysatorformkörper werden über einen Schneckenförderer oder eine Vibrationsrinne 4 der Zentrifuge 5 zugeführt (Schritt **C**). Dort wird unter teilweiser Rückführung der Lauge mit Wasser ausgelaugt (Schritt **D**) und zentrifugiert (Schritt **E**). Die Katalysatorformkörper werden nach dieser zweiten Laugung automatisch aus der Zentrifuge entfernt.

Die vereinigten Extrakte werden der Silberchloridfällung 6 oder einer anderen Weiterbehandlung zugeführt.

## Patentansprüche

1. Verfahren zur Entfernung des Edelmetalls, aus edelmetallhaltigen Katalysatorformkörpern, mit den Schritten
**A** Auslaugen des Edelmetalls aus einer Schüttung der Katalysatorformkörper,
**B** Entfernen der Mutterlauge,
**C** Automatisches Fördern der Formkörper in eine Zentrifuge,
**D** erneutes Auslaugen in der Zentrifuge,
**E** Abtrennen der restlichen Mutterlauge durch Zentrifugieren.

2. Verfahren nach Anspruch 1, wobei das Edelmetall Silber ist und die Katalysatorformkörper silberhaltig sind.

3. Verfahren nach Anspruch 2, wobei in den Schritten **A** und **D** das Auslaugen mit Salpetersäure erfolgt.

4. Verfahren nach einem der vorstehenden Ansprüche, bei dem Schritt **B** in Ablaufenlassen, Abpumpen oder Absaugen besteht.

5. Verfahren nach einem der vorstehenden Ansprüche, bei dem Schritt **C** mittels Schneckenförderung oder Vibrationsrinne durchgeführt wird.

6. Verfahren nach einem der vorstehenden Ansprüche, bei dem die Schritte **D** und **E** und wahlweise **B** in einer Zentrifuge des Typs Ziehfilterzentrifuge oder Stülpfilterzentrifuge erfolgen.

7. Verfahren nach einem der vorstehenden Ansprüche, bei dem die Schritte **D** und **E** diskontiniuierlich erfolgen.

## Claims

1. Process for removing the noble metal from noble metal-containing moulded catalyst bodies, involving the steps of
**A** leaching the noble metal from loosely heaped moulded catalyst bodies;
**B** removing the mother liquor;
**C** automatic conveying of the moulded bodies into a centrifuge;
**D** renewed leaching in the centrifuge;
**E** separating of the residual mother liquor by centrifuging.

2. Process according to claim 1, whereby the noble metal is silver and the moulded catalyst bodies are silver-containing.

3. Process according to claim 2, whereby the leaching with nitric acid takes place in steps **A** and **D**.

4. Process according to any one of the preceding claims, whereby step B consists of draining, pumping off or aspirating.

5. Process according to any one of the preceding claims, in which step C is carried out by screw conveying or vibration channel.

6. Process according to any one of the preceding claims, in which steps **D** and E and optionally **B** are carried out in a centrifuge of the type of a pull action filter centrifuge or inverted filter centrifuge.

7. Process according to any one of the preceding claims, in which steps **D** and **E** take place discontinuously.

## Revendications

1. Procédé d'élimination du métal noble de corps de moule de catalyseur contenant un métal noble, avec les étapes de
**A** lessivage du métal noble provenant d'une charge des corps de moule de catalyseur,
**B** élimination de la lessive mère,
**C** transport automatique des corps de moule dans une centrifugeuse,
**D** nouveau lessivage dans la centrifugeuse,
**E** séparation de la lessive mère restante par centrifugation.

2. Procédé selon la revendication 1, dans lequel le métal noble est l'argent et les corps de moule de catalyseur contiennent de l'argent.

3. Procédé selon la revendication 2, dans lequel le lessivage aux étapes **A** et **D** s'effectue avec de l'acide nitrique.

4. Procédé selon une des revendications précédentes, dans lequel l'étape **B** consiste en faire s'écouler, vidanger ou aspirer.

5. Procédé selon une des revendications précédentes, dans lequel l'étape **C** est effectuée au moyen d'un transport à vis ou d'une goulotte vibrante.

6. Procédé selon une des revendications précédentes, dans lequel les étapes **D** et **E** et au choix **B** s'effectuent dans une centrifugeuse du type centrifugeuse à filtre d'étirage ou centrifugeuse à filtre embouti.

7. Procédé selon une des revendications précédentes, dans lequel les étapes **D** et **E** s'effectuent de manière discontinue.
